# EUROPÄISCHE PATENTSCHRIFT

(11) **EP 1 912 836 B1**
(45) Veröffentlichungstag und Bekanntmachung des Hinweises auf die Patenterteilung: **16.12.2009**
(21) Anmeldenummer: 06792661.8
(22) Anmeldetag: 02.08.2006
(51) Int. Cl.: B60T 8/40, B60L 7/26

(54) **ELEKTROHYDRAULISCHE BREMSANLAGE FÜR KRAFTFAHRZEUGE**
ELECTROHYDRAULIC BRAKING SYSTEM FOR A MOTOR VEHICLE
SYSTEME DE FREINAGE ELECTROHYDRAULIQUE POUR VEHICULES AUTOMOBILES

(30) Priorität: 02.08.2005 DE 102005036233; 05.04.2006 DE 102006015906
(43) Veröffentlichungstag der Anmeldung: 23.04.2008
(73) Patentinhaber: Continental Teves AG & Co. oHG, 60488 Frankfurt am Main (DE)
(72) Erfinder: RIETH, Peter, 65343 Eltville (DE); SCHIEL, Lothar, 65719 Hofheim (DE); DRUMM, Stefan, 55291 Saulheim (DE)
(86) Internationale Anmeldenummer: PCT/EP2006/064986
(87) Internationale Veröffentlichungsnummer: WO 2007/014962

(56) Entgegenhaltungen:
- WO-A-00/73116
- WO-A-98/26966
- WO-A-03/047936
- DE-A1- 3 502 018
- US-A- 4 938 541

## Beschreibung

Die Erfindung betrifft eine elektrohydraulische Bremsanlage für Kraftfahrzeuge, vom Typ "Brake-by-Wire" gemäß dem Oberbegriff des Patentanspruchs 1.

Ein elektrohydraulisches Bremssystem ist z. B. aus der internationalen Patentanmeldung WO 03/047936 bekannt. Das vorbekannte Bremssystem weist hydraulische Mittel auf, die in einer durch einen Ausfall von elektrohydraulischen Komponenten charakterisierten Notfall- oder Rückfallbetriebsart einen im Hochdruckspeicher vorhandenen hydraulischen Druck dazu einsetzen, die Bremsflüssigkeit, die während der vorangegangenen Normalbremsung im "Brake-by-Wire"-Modus vom Hauptzylinder in den Wegsimulator verdrängt wurde, für eine mechanisch-hydraulische Hilfsbremsung zur Verfügung zu stellen, indem durch ein hydraulikventilgesteuertes Aufschalten des Hochdruckspeicher-Drucks auf einen im Normalbetrieb mit dem Bremsflüssigkeitsvorratsbehälter verbundenen hydraulischen Raum des Wegsimulators Druckmittel aus einem mit dem Hauptzylinder verbundenen hydraulischen Raum des Wegsimulators in den Hauptbremszylinder und einen daran angeschlossenen Hilfsbremskreis verdrängt wird, so dass die Radbremsen mit einem hydraulischen Druck betätigt werden, der durch die Muskelkraft des Fahrzeugführers vorgegeben ist, mit der dieser das Bremspedal betätigt. Die ergonomischen Kräfteverhältnisse in elektrohydraulischen Bremsanlagen für Kraftfahrzeuge vom Typ "Brake-by-Wire" erfordern bekanntermaßen eine Auslegung des Bremssystems, bei der im Normalbremsbetrieb die Radbremsdrücke ein Vielfaches des Hauptzylinderdrucks betragen.

Als nachteilig wird bei dem vorbekannten Bremssystem die Tatsache empfunden, dass bei einem Ausfall der elektrohydraulischen Komponenten lediglich eine Abbremsung des Fahrzeuges mit einem Bremsdruck weit unterhalb des im "Brake-by-Wire"-Modus bei gleicher Betätigungskraft erreichten Wertes möglich ist. Eine Bremskraftverstärkung mit Radbremsdrücken oberhalb des vom Fahrzeugführer mit dem Bremspedal in den Hauptbremszylinder eingesteuerten Drucks ist ohne voll funktionsfähige elektrohydraulischen Komponenten nicht darstellbar. Weiterhin wird als nachteilig empfunden, dass von dem erwähnten plötzlichen Rückfördern von Druckmittel aus dem Wegsimulator in den Hauptbremszylinder Rückwirkungen auf das Bremspedal verursacht werden, die geeignet sind, den Fahrzeugführer zusätzlich zum Verlust der Bremskraftverstärkung zu irritieren.

Eine gattungsgemäße Bremsanlage ist beispielsweise aus der WO 98/26966 A zu entnehmen. Die darin beschriebene Ventilanordnung ist sowohl hydrualisch durch den Hauptbremszylinder als auch elektromagnetisch betätigbar.

Es ist daher Aufgabe der vorliegenden Erfindung, ein zuverlässig funktionierendes Bremssystem der eingangs genannten Gattung zur Verfügung zu stellen bzw. ein Bremssystem vorzuschlagen, bei dem eine weitere Rückfallbetriebsart vorgesehen ist, die bei einem Ausfall der elektrohydraulischen Komponenten eine Abbremsung des Fahrzeuges mit Bremsdrücken ermöglicht, die größer sind, als der durch die Muskelkraft des Fahrzeugführers im Hauptbremszylinder vorgegebene Druck und welches eine alternative Fremdbetätigung aufweist.

Diese Aufgabe wird erfindungsgemäß dadurch gelöst, dass zum Aufbringen der Fremdkraft elektrohydraulische Mittel vorgesehen sind, die einen elektrisch analog steuerbaren Druck abgeben. Dies hat den Vorteil, dass die Stellenergie zum Bereitstellen der Fremdkraft dem Hochdruckspeicher entnommen wird, wodurch starke Schwankungen des elektrischen Leistungsbedarfs der elektronischen Steuer- und Regeleinheit vermieden werden.

Eine vorteilhafte Weiterbildung des Erfindungsgegenstandes sieht vor, dass die elektrohydraulischen Mittel durch analog regelbare Elektromagnetventile gebildet werden, die mit der Druckquelle und dem Druckmittelvorratsbehälter hydraulisch verbunden sind. Diese regelbaren Elektromagnetventile haben sich bereits als Bremssystemkomponenten bewährt. Auch in der vorbekannten Bremsanlage sind sie enthalten, wenn auch an anderer Stelle und in anderer Funktion.

Eine andere vorteilhafte Weiterbildung des Erfindungsgegenstandes sieht vor, dass die Betätigung der Ventilanordnung mittels eines Betätigungselementes erfolgt, das mit einem Ventilkörper der Ventilanordnung in kraftübertragender Verbindung steht. Eine hydraulisch wirksame Querschnittsfläche des Betätigungselements definiert den Proportionalitätsfaktor zwischen dem Hauptbremszylinderdruck und der übertragenen Ventilbetätigungskraft.

Bei einer anderen vorteilhaften Ausgestaltung der Erfindung ist die Ventilanordnung als ein Schieberventil ausgebildet. Gegenüber anderen an dieser Stelle ebenso gut einsetzbaren Ventilbauarten mit Ventilsitzen bzw. Kombinationen von Ventilsitz und Steuerkanten in Schieberbauweise hat das Schieberventil den Vorzug eines einteiligen Aufbaus.

Das vorhin erwähnte Betätigungselement ist bei einer weiteren Ausführung des Erfindungsgegenstandes als ein hydraulischer Kolben ausgeführt, der sowohl mit dem vom Hauptbremszylinder bereitgestellten Druck als auch mit dem elektrisch analog steuerbaren Druck beaufschlagbar ist. Der hydraulische Kolben begrenzt vorzugsweise einen hydraulischen Raum, der mit einem der bereitgestellten Drücke beaufschlagbar ist. Bei zugeschaltetem elektrisch analog steuerbarem Druck arbeitet die Bremsanlage in der "Brake-by-Wire" Betriebsart, bei Zuschaltung des Hauptzylinderdrucks in der erwähnten Rückfallbetriebsart als Bremsanlage mit rein hydraulischer Verstärkung.

Eine andere sinnvolle Weiterbildung der Erfindung besteht darin, in den Verbindungen zwischen dem Hauptbremszylinder und dem hydraulischen Raum sowie zwischen der Druckquelle und dem hydraulischen Raum ein Wechselventil einzufügen, das durch eine Druckdifferenz zwischen dem vom Hauptbremszylinder bereitgestellten Druck und dem elektrisch steuerbaren Druck betätigt wird.

Dabei erfolgt die hydraulische Betätigung des Wechselventils derart, dass der hydraulische Raum mit dem jeweils höheren Druck beaufschlagt wird. Damit wird automatisch zwischen der "Brake-by-Wire"-Betriebsart und der hydraulisch verstärkten Betriebsart derart umgeschaltet, dass sich die jeweils höhere Bremsdruckanforderung durchsetzt.

Eine andere vorteilhafte Ausführungsvariante des Erfindungsgegenstandes sieht vor, dass der hydraulische Kolben als ein Stufenkolben ausgeführt ist, dessen Ringfläche mit dem vom Hauptbremszylinder bereitgestellten Druck beaufschlagbar ist, während die Kolbenfläche mit kleinerem Durchmesser mit dem elektrisch analog steuerbaren Druck beaufschlagbar ist. In dieser Variante kann auf ein Wechselventil zur Auswahl der jeweils höheren Radbremsdruckanforderung verzichtet werden.

Der vorhin erwähnte hydraulische Raum wird andererseits von einem weiteren, mittels einer Feder vorgespannten Kolben begrenzt, dessen Bewegung gegen die Kraft der Feder eine Volumenaufnahme für das von den elektrohydraulischen Mitteln abgegebene Druckmittel ermöglicht. Eine solche Volumenaufnahme verbessert die Regelgüte der elektrohydraulischen Druckregelung in der "Brake-by-Wire"-Betriebsart.

Eine weitere vorteilhafte Ausgestaltung des Erfindungsgegenstandes sieht vor, dass in den Verbindungen zwischen dem Hauptbremszylinder und den Radbremsen sowie zwischen der Ventilanordnung und den Radbremsen Wechselventile eingefügt sind, die durch eine Druckdifferenz zwischen dem vom Hauptbremszylinder bereitgestellten Druck und dem von der Ventilanordnung abgegebenen, analog steuerbaren hydraulischen Bremsdruck betätigt werden und die in einer ersten Schaltstellung den Hauptbremszylinder mit den Radbremsen verbinden und in einer zweiten Schaltstellung den Ausgang der Ventilanordnung mit den Radbremsen verbinden.

Um insbesondere eine für sog. Rekuperationsbremsungen bei Hybridfahrzeugen notwendige Absenkung der Radbremsdrücke auf Werte unterhalb des Hauptzylinderdrucks durchzuführen wird schließlich vorgesehen, dass in den hydraulischen Verbindungen zwischen dem Hauptzylinder und den Radbremsen elektrisch betätigbare 2/2-Wegeventile eingefügt sind, die bei einer Aktivierung einen Druckmittelaustausch zwischen dem Hauptbremszylinder und den Radbremsen, sowie zwischen dem Hauptbremszylinder und der Ventilanordnung verhindern.

Weitere Einzelheiten, Merkmale und Vorteile der Erfindung gehen aus der nachfolgenden Beschreibung von drei Ausführungsbeispielen unter Bezugnahme auf die beiliegende Zeichnung hervor. In der Zeichnung, in der die gleichen Komponenten mit den gleichen Bezugszeichen versehen sind, zeigen:
Fig. 1 den Aufbau einer bekannten Ausführungsform eines Bremssystems im unbetätigten und stromlosen Zustand;
Fig. 2 eine stark vergrößerte Darstellung der in Fig. 1 gezeigten Ventilanordnung;
Fig. 3 den Aufbau einer ersten Ausführungsform des erfindungsgemäßen Bremssystems im unbetätigten und stromlosen Zustand;
Fig. 4 eine stark vergrößerte Darstellung der in Fig. 3 gezeigten Ventilanordnung;
Fig. 5 und Fig. 6 den Aufbau einer zweiten und einer dritten Ausführungsform des erfindungsgemäßen Bremssystems im unbetätigten und stromlosen Zustand, und
Fig.7 eine stark vergrößerte Darstellung der in den Fig. 5 und 6 gezeigten Ventilanordnung.

Das in der Zeichnung lediglich schematisch dargestellte elektrohydraulische Bremssystem besteht im wesentlichen aus einem mittels eines Bremspedals 1 betätigbaren, zweikreisigen hydraulischen Druckerzeuger bzw. Hauptbremszylinder 2 in Tandemausführung, einem mit dem Tandemhauptzylinder 2 zusammenwirkenden Wegsimulator 3, einem dem Tandemhauptzylinder 2 zugeordneten Druckmittelvorratsbehälter 4, einem schematisch dargestellten Hydraulikmodul 5, an das den Fahrzeugrädern zugeordnete Radbremsen 7, 8, 11, 12 angeschlossen sind, sowie einer elektronischen Steuer- und Regeleinheit 16. Im Hydraulikmodul 5 sind eine Druckquelle, eine hydraulische Steuereinheit HCU 6, die sämtliche, für radindividuelle Druckregelvorgänge erforderlichen Komponenten bzw. Druckregelventile enthält, eine mit dem Bezugszeichen 13 versehene Ventilanordnung sowie zwei Wechselventile 17, 18 integriert, deren Aufgabe nachfolgend erläutert wird. Zur Ermittlung der Drehzahl der Fahrzeugräder dienen lediglich angedeutete, näher nicht bezeichnete Radsensoren. Der an sich bekannte Tandemhauptzylinder 2 weist durch zwei Kolben 9, 10, begrenzte, voneinander getrennte Druckräume 14, 15 auf, die sowohl mit dem Druckmittelvorratsbehälter 4 als auch über die HCU 6 mit den Fahrzeugbremsen 7, 8, 11, 12 verbindbar sind. Die vorhin erwähnte Druckquelle wird durch ein Motor-Pumpenaggregat 20, das aus einem Elektromotor 22 sowie eine vom Elektromotor 22 angetriebene Pumpe 23 besteht, ein der Pumpe 23 parallel geschaltetes Druckbegrenzungsventil 24 sowie einen durch die Pumpe 23 aufladbaren Hochdruckspeicher 21 gebildet. Der im Hochdruckspeicher 21 vorliegende hydraulische Druck wird von einem Drucksensor 25 überwacht.

Die vorhin erwähnte Ventilanordnung 13, die im gezeigten Beispiel als ein Schieberventil ausgebildet ist, ist wirkungsmäßig zwischen der Druckquelle 20, 21 und den Radbremsen 7, 8, 11, 12 geschaltet und wird einerseits durch einen elektromechanischen Aktuator 28 und andererseits durch den im ersten Druckraum 14 des Hauptbremszylinders 2 eingesteuerten hydraulischen Druck betätigt.

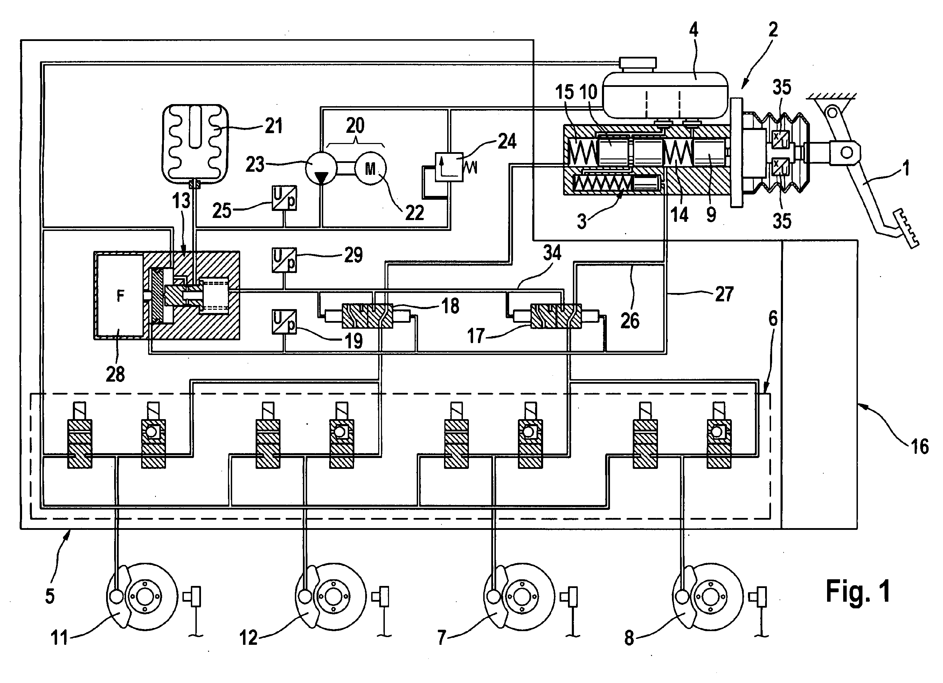

Wie weiterhin der Zeichnung zu entnehmen ist, sind die Radbremsen 7, 8 an den ersten Druckraum 14 mittels einer Leitung 26 angeschlossen, in der das erste Wechselventil 17 eingefügt ist, das in einer ersten Schaltstellung den ersten Druckraum 14 mit den Radbremsen 7, 8 verbindet und in der zweiten Schaltstellung den Ausgang der Ventilanordnung 13 mit den Radbremsen 7, 8 bei gleichzeitigem Unterbrechen der Leitung 26 verbindet. Vor dem Wechselventil 17 zweigt von der Leitung 26 eine weitere, zur Ventilanordnung 13 führende Leitung 27 ab, die der hydraulischen Ansteuerung der Ventilanordnung 13 dient. In Fig. 1 ist zu erkennen, dass das Wechselventil 17 durch eine Druckdifferenz zwischen dem vom Hauptbremszylinder 2 bereitgestellten Druck und dem von der Ventilanordnung 13 analog steuerbaren hydraulischen Bremsdruck betätigt wird. Diese Betätigung des Wechselventils 17 erfolgt derart, dass die Radbremsen 7, 8 mit dem jeweils höheren Druck beaufschlagt werden. Der im ersten Druckraum 14 eingesteuerte Druck wird mittels eines Drucksensors 19 überwacht, während der von der Ventilanordnung 13 gelieferte Druck mittels eines Drucksensors 29 erfasst wird. Entsprechend gelten die obigen Erläuterungen auch für den zweiten Druckraum 15, das zweite Wechselventil 18 sowie die an den zweiten Druckraum 15 angeschlossenen Radbremsen 11, 12.

Die vorhin erwähnte elektronische Regel- und Steuereinheit 16, der die Ausgangssignale der Drucksensoren 19, 25, 29, der Raddrehzahlsensoren sowie einer vorzugsweise redundant ausgeführten Bremswunscherfassungseinrichtung 35 zugeführt werden, die dem Hauptbremszylinder 2 zugeordnet ist, dient der Ansteuerung des Motor-Pumpen-Aggregats 20, des Aktuators 28, sowie der hydraulischen Steuereinheit HCU 6.

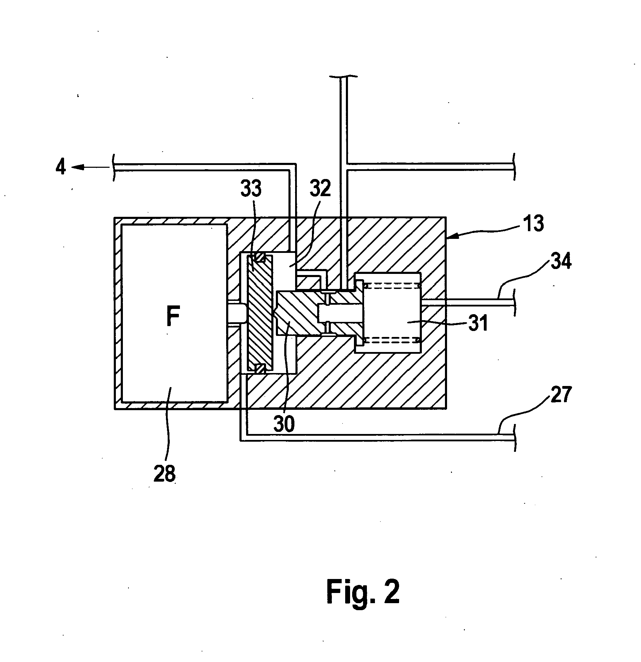

Wie insbesondere Fig. 2 zu entnehmen ist, weist die Ventilanordnung 13 einen Ventilkörper 30 auf, der in der gezeigten Schaltstellung eine hydraulische Verbindung zwischen einem Ausgangsraum 31, der mittels einer Leitung 34 mit einem Eingangsanschluss des Wechselventils 17 verbunden ist, und einer hydraulischen Kammer 32 ermöglicht, die mit dem Druckmittelvorratsbehälter 4 in Verbindung steht. Die Kammer 32 wird von einem hydraulischen Kolben 33 begrenzt, der einerseits, wie bereits oben erwähnt wurde, über die Leitung 27 mit dem im Hauptbremszylinder 2 eingesteuerten Druck belastet wird und andererseits mit dem elektromechanischen Aktuator 28 in kraftübertragender Verbindung steht.

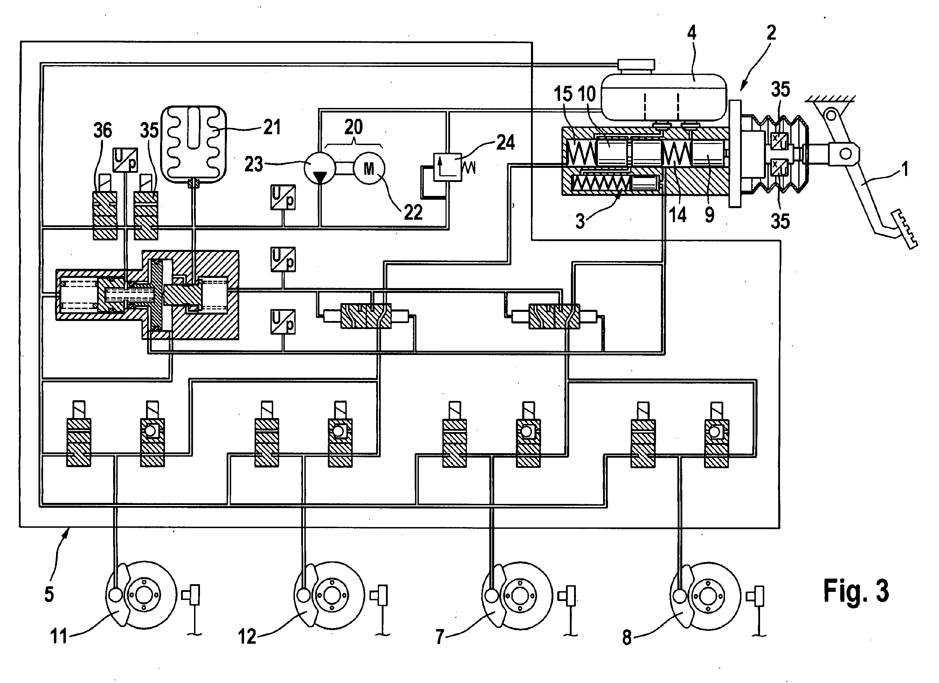

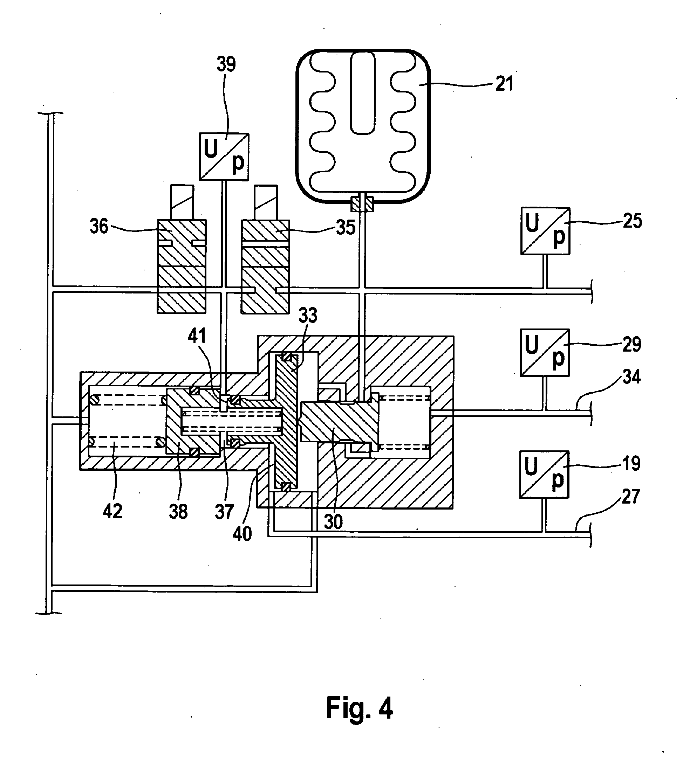

Bei der in Fig. 3 und 4 gezeigten ersten erfindungsgemäßen Ausführung wird die im Zusammenhang mit Fig. 1 und 2 erwähnte Ventilanordnung 13 zusätzlich zur hydraulischen Ansteuerung durch den Hauptbremszylinder 2 durch elektrohydraulische Mittel angesteuert, die im gezeigten Beispiel durch elektrisch ansteuerbare, analog regelbare 2/2-Wegeventile 35, 36 gebildet sind. Das an den Ausgang der Druckquelle 20 bzw. 21 angeschlossene 2/2-Wegeventil 35 ist als stromlos geschlossenes (SG-)-Ventil ausgeführt, während das andere 2/2-Wegeventil 36 als ein stromlos offenes (SO-)Ventil ausgebildet ist. Die Ausgangsseite des erstgenannten Ventils 35 sowie die Eingangsseite des zweitgenannten Ventils 36 ist an einen hydraulischen Raum 37 angeschlossen, der einerseits vom Kolben 33 und andererseits von einem weiteren Kolben 38 begrenzt ist. Der durch die Ventile 35, 36 elektrisch analog regelbare Druck im Raum 37 wird mittels eines weiteren Drucksensors 39 überwacht. Wie insbesondere aus Fig. 4 zu erkennen ist, ist der Kolben 33 als Stufenkolben ausgebildet, dessen Ringfläche 40 mit dem vom Hauptbremszylinder 2 bereitgestellten Druck beaufschlagt wird, während auf seine Kolbenfläche 41 kleineren Durchmessers der durch die 2/2-Wegeventile 35, 36 elektrisch analog regelbare Druck einwirkt. Der andere Kolben 38 ist mittels einer Druckfeder 42 vorgespannt, wobei seine Bewegung entgegen der Kraft der Feder 42 eine Vergrößerung des hydraulischen Raumes 37 und somit eine Aufnahme des von den Ventilen 35, 36 bereit gestellten Druckmittelvolumens ermöglicht.

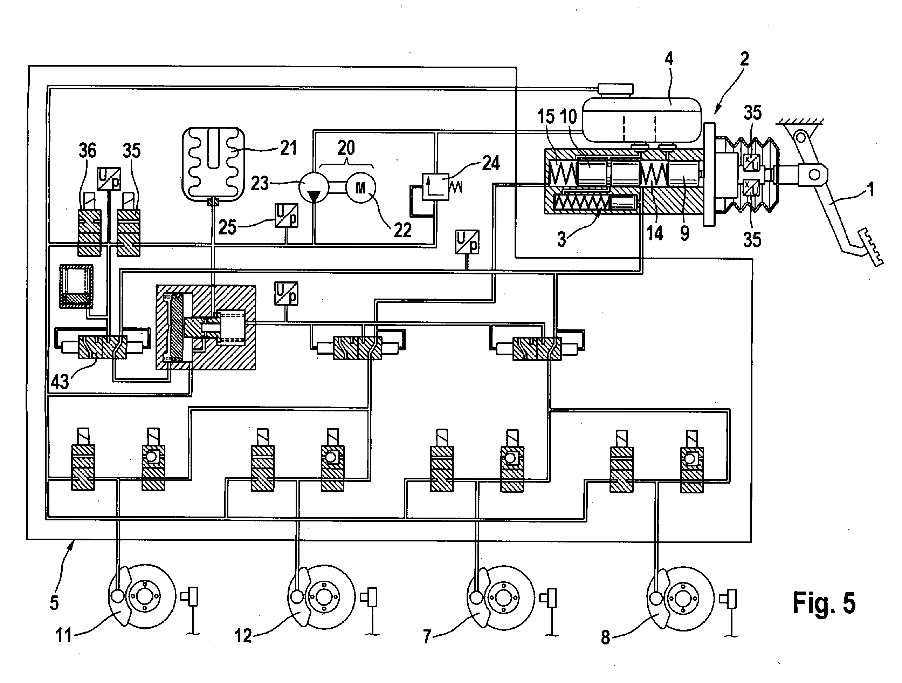

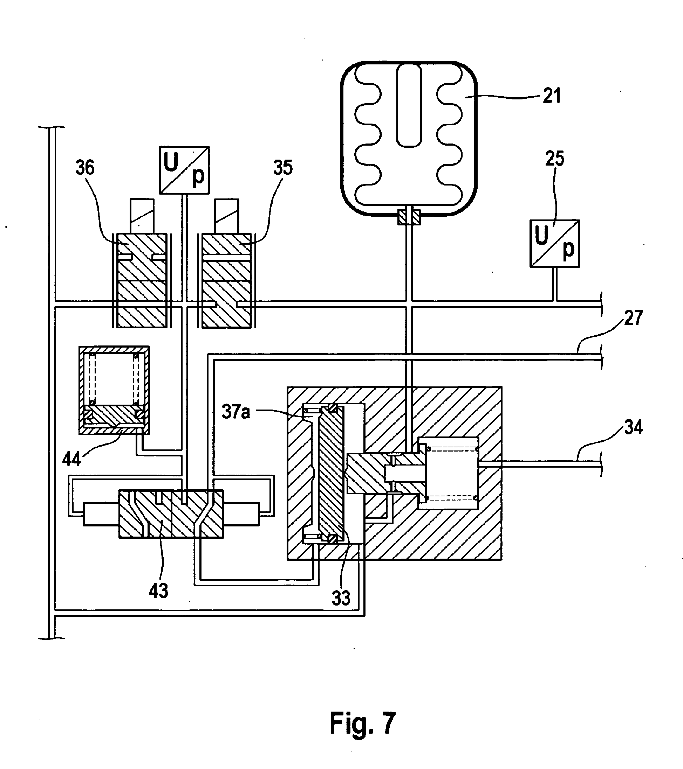

Bei den in Fig. 5 bis 7 gezeigten Ausführungsbeispielen ist in die Leitung zwischen den analog regelbaren 2/2-Wegeventilen 35, 36 und dem vom Kolben 33 begrenzten Raum 37a (s. Fig. 7) ein Wechselventil 43 eingefügt, das durch eine Druckdifferenz zwischen dem vom Hauptbremszylinder 2 bereitgestellten Druck und dem von den elektrohydraulischen Mitteln 35, 36 abgegebenen, elektrisch analog steuerbaren hydraulischen Druck betätigbar ist. Die Betätigung des Wechselventils 43 erfolgt derart, dass der Kolben 33 mit dem jeweils höheren Druck beaufschlagt wird. Außerdem ist an die vorhin genannte Leitung ein Volumenaufnahmeelement 44 angeschlossen.

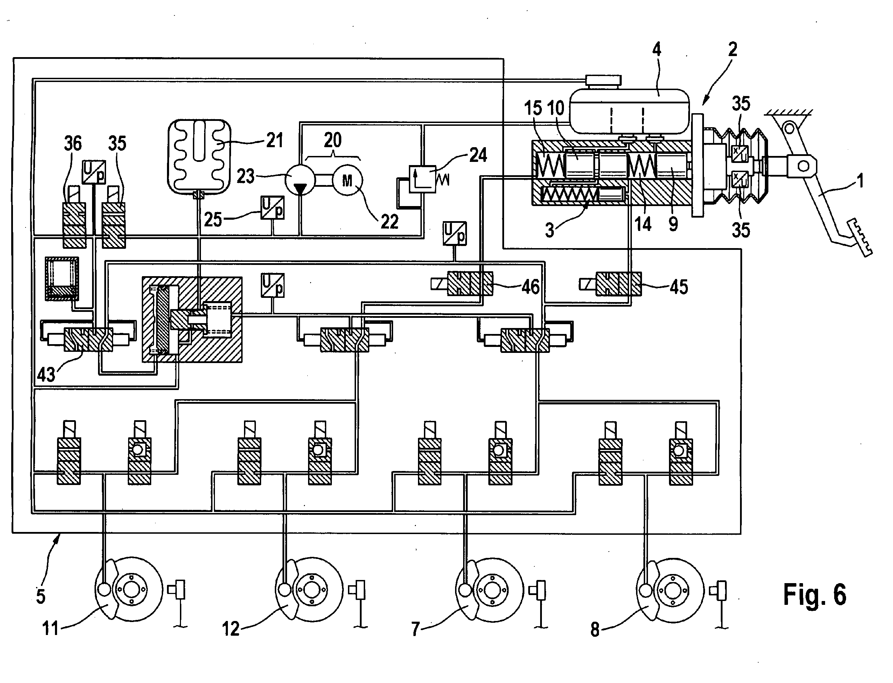

Um einen Bremsdruck einzustellen, der niedriger als der dem Fahrerverzögerungswunsch entsprechende Druckwert ist, sind bei der in Fig. 6 dargestellten Ausführung zwei an die Druckräume 14, 15 des Hauptbremszylinders 2 angeschlossene, stromlos offene (SO-) 2/2-Wegeventile 45, 46 angeschlossen, die beim Aktivieren einen Druckmittelaustausch zwischen dem Hauptbremszylinder 2 und den Radbremsen 7, 8, 11, 12, sowie zwischen dem Hauptbremszylinder 2 und der Ventilanordnung 13 verhindern. Ein derartiges Bremssystem kommt insbesondere in Fahrzeugen mit zusätzlicher Rekuperationsbremse (sog. Hybridfahrzeugen) zum Einsatz.

## Patentansprüche

1. Elektrohydraulische Bremsanlage für Kraftfahrzeuge, vom Typ "Brake-by-Wire" mit einem mittels eines Bremspedals (1) betätigbaren, mindestens einen Druckraum (14, 15) aufweisenden Hauptbremszylinder (2),
einem drucklosen Druckmittelvorratsbehälter (4),
einem mit dem Hauptbremszylinder (2) zusammenwirkenden Wegsimulator (3), der im "Brake-by-Wire"-Modus dem Fahrzeugführer das herkömmliche Gefühl am Bremspedal (1) vermittelt,
einer mittels einer elektronischen Steuer- und Regeleinheit (16) ansteuerbaren hydraulischen Druckquelle (20, 21), die
aus einer hydraulischen Pumpe (23) sowie einem durch die Pumpe (23) aufladbaren Hochdruckspeicher (21) gebildet ist und mit deren Druck Radbremsen (7, 8, 11, 12) des Fahrzeuges beaufschlagbar sind,
die mittels mindestens einer durch ein Trennventil absperrbaren Verbindung an den Hauptbremszylinder (2) angeschlossen sind und denen Druckregelventile zugeordnet sind, die durch die elektronische Steuer- und Regeleinheit (16) ansteuerbar sind, wobei in der Verbindung zwischen den Radbremsen (7, 8, 11, 12) und der Druckquelle (20, 21) eine Ventilanordnung (13) vorgesehen ist, die sowohl hydraulisch durch den vom Hauptbremszylinder (2) bereitgestellten Druck als auch durch eine Fremdkraft betätigbar ist, **dadurch gekennzeichnet, dass** zum Aufbringen der Fremdkraft elektrohydraulische Mittel (35, 36) vorgesehen sind, die einen elektrisch analog steuerbaren Druck abgeben.

2. Elektrohydraulische Bremsanlage nach Anspruch 1 **dadurch gekennzeichnet, dass** die elektrohydraulischen Mittel durch analog regelbare Elektromagnetventile (35, 36) gebildet werden, die mit der Druckquelle (20 bzw. 21) und dem Druckmittelvorratsbehälter (4) hydraulisch verbunden sind.

3. Elektrohydraulische Bremsanlage nach Anspruch 2 **dadurch gekennzeichnet, dass** die Betätigung der Ventilanordnung (13) mittels eines Betätigungselementes (33) erfolgt, das mit einem Ventilkörper (30) der Ventilanordnung (13) in kraftübertragender Verbindung steht.

4. Elektrohydraulische Bremsanlage nach einem der Ansprüche 1 bis 3 **dadurch gekennzeichnet, dass** die Ventilanordnung (13) als ein Schieberventil ausgebildet ist.

5. Elektrohydraulische Bremsanlage nach Anspruch 3 oder 4, wenn von Anspruch 3 abhängig, **dadurch gekennzeichnet, dass** das Betätigungselement (33) als ein hydraulischer Kolben ausgeführt ist, der sowohl mit dem vom Hauptbremszylinder (2) bereitgestellten Druck als auch mit dem elektrisch analog steuerbaren Druck beaufschlagbar ist.

6. Elektrohydraulische Bremsanlage nach Anspruch 5 **dadurch gekennzeichnet, dass** der hydraulische Kolben einen hydraulischen Raum (37,37a) begrenzt, der mit einem der bereitgestellten Drücke beaufschlagbar ist.

7. Elektrohydraulische Bremsanlage nach Anspruch 6 **dadurch gekennzeichnet, dass** in den Verbindungen zwischen dem Hauptbremszylinder (2) und dem hydraulischen Raum (37a) sowie zwischen der Druckquelle (20 bzw. 21) und dem hydraulischen Raum (37a) ein Wechselventil (43) eingefügt ist, das durch eine Druckdifferenz zwischen dem vom Hauptbremszylinder (2) bereitgestellten Druck und dem elektrisch analog steuerbaren Druck betätigt wird.

8. Elektrohydraulische Bremsanlage nach Anspruch 7 **dadurch gekennzeichnet, dass** die hydraulische Betätigung des Wechselventils (43) derart erfolgt, dass der hydraulische Raum (37a) mit dem jeweils höheren Druck beaufschlagt wird.

9. Elektrohydraulische Bremsanlage nach einem der Ansprüche 5 bis 8 **dadurch gekennzeichnet, dass** der hydraulische Kolben (33) als ein Stufenkolben ausgeführt ist, dessen Ringfläche (40) mit dem vom Hauptbremszylinder (2) bereitgestellten Druck beaufschlagt ist, während dessen Kolbenfläche (41) kleineren Durchmessers mit dem elektrisch analog steuerbaren Druck beaufschlagt ist.

10. Elektrohydraulische Bremsanlage nach einem der Ansprüche 6 bis 9 **dadurch gekennzeichnet, dass** der hydraulische Raum (37) andererseits von einem weiteren, mittels einer Feder (42) vorgespannten Kolben (38) begrenzt wird, dessen Bewegung gegen die Kraft der Feder (42) eine Volumenaufnahme für das von den elektrohydraulischen Mitteln (35, 36) abgegebene Druckmittel ermöglicht.

11. Elektrohydraulische Bremsanlage nach einem der vorhergehenden Ansprüche **dadurch gekennzeichnet, dass** in den Verbindungen (26, -) zwischen dem Hauptbremszylinder (2) und den Radbremsen (7, 8, 11, 12) sowie zwischen der Ventilanordnung 13 und den Radbremsen (7, 8, 11, 12) Wechselventile (17, 18) eingefügt sind, die durch eine Druckdifferenz zwischen dem vom Hauptbremszylinder (2) bereitgestellten Druck und dem von der Ventilanordnung (13) abgegebenen, analog steuerbaren hydraulischen Bremsdruck betätigt werden und die in einer ersten Schaltstellung den Hauptbremszylinder (2) mit den Radbremsen (7, 8, 11, 12) verbinden und in einer zweiten Schaltstellung den Ausgang der Ventilanordnung (13) mit den Radbremsen (7, 8, 11, 12) verbinden.

12. Elektrohydraulische Bremsanlage nach einem der vorhergehenden Ansprüche **dadurch gekennzeichnet, dass** in den hydraulischen Verbindungen zwischen dem Hauptzylinder (2) und den Radbremsen (7, 8, 11, 12) elektrisch betätigbare 2/2-Wegeventile (45, 46) eingefügt sind, die bei einer Aktivierung einen Druckmittelaustausch zwischen dem Hauptbremszylinder (2) und den Radbremsen (7, 8, 11, 12), sowie zwischen dem Hauptbremszylinder (2) und der Ventilanordnung (13) verhindern.

## Claims

1. Electrohydraulic brake system for motor vehicles, of the "brake-by-wire" type, with a brake master cylinder (2) actuable by means of a brake pedal (1) and having at least one pressure space (14, 15), with a pressureless pressure-medium reservoir (4), with a travel simulator (3) which cooperates with the brake master cylinder (2) and in the "brake-by-wire" mode gives the vehicle driver the customary sensation on the brake pedal (1), and with a hydraulic pressure source (20, 21) which is activatable by means of an electronic control and regulation unit (16) and which is formed from a hydraulic pump (23) and from a high-pressure accumulator (21) chargeable by means of the pump (23) and the pressure of which is capable of acting upon wheel brakes (7, 8, 11, 12) of the vehicle which are connected to the brake master cylinder (2) by means of at least one connection capable of being shut off by means of an isolating valve and which are assigned pressure-regulating valves which are activatable by the electronic control and regulation unit (16), there being provided in the connection between the wheel brakes (7, 8, 11, 12) and the pressure source (20, 21) a valve arrangement (13) which can be actuated both hydraulically by the pressure provided by the brake master cylinder (2) and by power, **characterized in that**, in order to apply the power, electrohydraulic means (35, 36) are provided which emit an electrically analogue-controllable pressure.

2. Electrohydraulic brake system according to Claim 1, **characterized in that** the electrohydraulic means are formed by analogue-regulatable electromagnetic valves (35, 36) which are connected hydraulically to the pressure source (20 or 21) and to the pressure-medium reservoir (4).

3. Electrohydraulic brake system according to Claim 2, **characterized in that** the actuation of the valve arrangement (13) takes place by means of an actuating element (33) which is in force-transmitting connection to a valve body (30) of the valve arrangement (13).

4. Electrohydraulic brake system according to one of Claims 1 to 3, **characterized in that** the valve arrangement (13) is designed as a slide valve.

5. Electrohydraulic brake system according to Claim 3 or 4, when dependent on Claim 3, **characterized in that** the actuating element (33) is designed as a hydraulic piston which can be acted upon both by the pressure provided by the brake master cylinder (2) and by the electrically analogue-controllable pressure.

6. Electrohydraulic brake system according to Claim 5, **characterized in that** the hydraulic piston delimits a hydraulic space (37, 37a) which can be acted upon by one of the pressures provided.

7. Electrohydraulic brake system according to Claim 6, **characterized in that**, in the connections between the brake master cylinder (2) and the hydraulic space (37a) and also between the pressure source (20 or 21) and the hydraulic space (37a), a shuttle valve (43) is inserted, which is actuated by a pressure difference between the pressure provided by the brake master cylinder (2) and the electrically analogue-controllable pressure.

8. Electrohydraulic brake system according to Claim 7, **characterized in that** the hydraulic actuation of the shuttle valve (43) takes place in such a way that the hydraulic space (37a) is acted upon in each case by the higher pressure.

9. Electrohydraulic brake system according to one of Claims 5 to 8, **characterized in that** the hydraulic piston (33) is designed as a stepped piston, the annular surface (40) of which is acted upon by the pressure provided by the brake master cylinder (2), while its piston surface (41) of smaller diameter is acted upon by the electrically analogue-controllable pressure.

10. Electrohydraulic brake system according to one of Claims 6 to 9, **characterized in that** the hydraulic space (37) is delimited, on the other hand, by a further piston (38) which is prestressed by means of a spring (42) and of which the movement counter to the force of the spring (42) makes it possible to have capacity for the pressure medium emitted by the electrohydraulic means (35, 36).

11. Electrohydraulic brake system according to one of the preceding claims, **characterized in that**, in the connections (26, -) between the brake master cylinder (2) and the wheel brakes (7, 8, 11, 12) and also between the valve arrangement (13) and the wheel brakes (7, 8, 11, 12), shuttle valves (17, 18) are inserted, which are actuated by a pressure difference between the pressure provided by the brake master cylinder (2) and the analogue-controllable hydraulic brake pressure emitted by the valve arrangement (13) and which, in a first switching position, connect the brake master cylinder (2) to the wheel brakes (7, 8, 11, 12) and, in a second switching position, connect the outlet of the valve arrangement (13) to the wheel brakes (7, 8, 11, 12).

12. Electrohydraulic brake system according to one of the preceding claims, **characterized in that**, in the hydraulic connections between the master cylinder (2) and the wheel brakes (7, 8, 11, 12), electrically actuable 2/2-way valves (45, 46) are inserted, which, when activated, prevent an exchange of pressure medium between the brake master cylinder (2) and the wheel brakes (7, 8, 11, 12) and also between the brake master cylinder (2) and the valve arrangement (13).

## Revendications

1. Système de freinage électrohydraulique pour véhicules automobiles, du type "Brake-by-Wire", comprenant un cylindre de frein principal (2) pouvant être actionné au moyen d'une pédale de frein (1), présentant au moins un espace de pression (14, 15), un réservoir de fluide sous pression sans pression (4), un simulateur de course (3) coopérant avec le cylindre de frein principal (2), qui, en mode de "Brake-by-Wire", donne au conducteur du véhicule la sensation usuelle sur la pédale de frein (1),
une source de pression hydraulique (20, 21) commandable au moyen d'une unité de commande et de régulation électronique (16), qui est formée d'une pompe hydraulique (23) ainsi que d'un accumulateur haute pression (21) pouvant être chargé par la pompe (23) et avec la pression duquel des freins de roue (7, 8, 11, 12) du véhicule peuvent être sollicités,
lesquels sont raccordés au cylindre de frein principal (2) au moyen d'au moins une connexion verrouillable par une soupape de coupure, et auxquels sont associées des soupapes de régulation de la pression qui peuvent être commandées par l'unité de commande et de régulation électronique (16), un agencement de soupape (13) étant prévu dans la connexion entre les freins de roue (7, 8, 11, 12) et la source de pression (20, 21), lequel peut être actionné à la fois hydrauliquement par la pression fournie par le cylindre de frein principal (2) et aussi par une force extérieure, **caractérisé en ce que** pour appliquer la force extérieure, des moyens électrohydrauliques (35, 36) sont prévus, lesquels produisent une pression commandable de manière analogique électriquement.

2. Système de freinage électrohydraulique selon la revendication 1, **caractérisé en ce que** les moyens électrohydrauliques sont formés par des électrovannes réglables de manière analogique (35, 36), qui sont connectés hydrauliquement à la source de pression (20, respectivement 21) et au réservoir de fluide sous pression (4).

3. Système de freinage électrohydraulique selon la revendication 2, **caractérisé en ce que** l'actionnement de l'agencement de soupape (13) s'effectue au moyen d'un élément d'actionnement (33), qui est en liaison par transmission de force avec un corps de soupape (30) de l'agencement de soupape (13).

4. Système de freinage électrohydraulique selon l'une quelconque des revendications 1 à 3, **caractérisé en ce que** l'agencement de soupape (13) est réalisé sous forme de soupape à tiroir.

5. Système de freinage électrohydraulique selon la revendication 3 ou 4, lorsqu'elle dépend de la revendication 3, **caractérisé en ce que** l'élément d'actionnement (33) est réalisé sous forme de piston hydraulique qui peut être sollicité à la fois par la pression fournie par le cylindre de frein principal (2) et par la pression commandable de manière analogique électriquement.

6. Système de freinage électrohydraulique selon la revendication 5, **caractérisé en ce que** le piston hydraulique limite un espace hydraulique (37, 37a) qui peut être sollicité par l'une des pressions fournies.

7. Système de freinage électrohydraulique selon la revendication 6, **caractérisé en ce que** dans les connexions entre le cylindre de frein principal (2) et l'espace hydraulique (37a), ainsi qu'entre la source de pression (20, respectivement 21) et l'espace hydraulique (37a), est insérée une soupape d'échange (43) qui est actionnée par une différence de pression entre la pression fournie par le cylindre de frein principal (2) et la pression commandable de manière analogique électriquement.

8. Système de freinage électrohydraulique selon la revendication 7, **caractérisé en ce que** l'actionnement hydraulique de la soupape d'échange (43) s'effectue de telle sorte que l'espace hydraulique (37a) soit sollicité à chaque fois avec la pression la plus élevée.

9. Système de freinage électrohydraulique selon l'une quelconque des revendications 5 à 8, **caractérisé en ce que** le piston hydraulique (33) est réalisé sous forme de piston étagé, dont la surface annulaire (40) est sollicitée par la pression fournie par le cylindre de frein principal (2), tandis que sa surface de piston (41) de plus petit diamètre est sollicitée par la pression pouvant être commandée de manière analogique électriquement.

10. Système de freinage électrohydraulique selon l'une quelconque des revendications 6 à 9, **caractérisé en ce que** l'espace hydraulique (37) est limité d'autre part par un autre piston (38) précontraint au moyen d'un ressort (42), dont le mouvement à l'encontre de la force du ressort (42) permet une réception d'un volume pour le fluide sous pression délivré par les moyens électrohydrauliques (35, 36).

11. Système de freinage électrohydraulique selon l'une quelconque des revendications précédentes, **caractérisé en ce que** dans les connexions (26, -) entre le cylindre de frein principal (2) et les freins de roue (7, 8, 11, 12) ainsi qu'entre l'agencement de soupape (13) et les freins de roue (7, 8, 11, 12), sont insérées des soupapes d'échange (17, 18) qui sont actionnées par une différence de pression entre la pression fournie par le cylindre de frein principal (2) et la pression de freinage hydraulique commandable de manière analogique fournie par l'agencement de soupape (13), et qui relient dans une première position de commutation le cylindre de frein principal (2) aux freins de roue (7, 8, 11, 12) et dans une deuxième position de commutation la sortie de l'agencement de soupape (13) aux freins de roue (7, 8, 11, 12).

12. Système de freinage électrohydraulique selon l'une quelconque des revendications précédentes, **caractérisé en ce que** dans les connexions hydrauliques entre lé cylindre principal (2) et les freins de roue (7, 8, 11, 12) sont insérées des soupapes à 2/2 voies actionnables électriquement (45, 46), qui, dans le cas d'une activation empêchent un échange de fluide sous pression entre le cylindre de frein principal (2) et les freins de roue (7, 8, 11, 12) ainsi qu'entre le cylindre de frein principal (2) et l'agencement de soupape (13).
